# EUROPÄISCHE PATENTSCHRIFT

(11) **EP 3 501 269 B1**
(45) Veröffentlichungstag und Bekanntmachung des Hinweises auf die Patenterteilung: **16.09.2020**
(21) Anmeldenummer: 18213289.4
(22) Anmeldetag: 18.12.2018
(51) Int. Cl.: A01J 25/15, A01J 25/13

(54) **PRESSDECKEL**
PRESS COVER
COUVERCLE DE PRESSAGE

(30) Priorität: 21.12.2017 CH 15852017
(43) Veröffentlichungstag der Anmeldung: 26.06.2019
(73) Patentinhaber: Kalt Maschinenbau AG, 9604 Lütisburg (CH)
(72) Erfinder: Waldburger, Peter, 9246 Niederbüren (CH)
(74) Vertreter: Frommhold, Joachim

(56) Entgegenhaltungen:
- EP-A1- 2 710 889
- DE-A1- 2 317 594
- GB-A- 2 132 131
- US-A1- 2006 175 224

## Beschreibung

Die Erfindung betrifft einen Pressdeckel, der mit einer Käseform korrespondiert, insbesondere für eine Käseform, die in einer Kassettenpresse oder dergleichen angeordnet ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismus" für die Formen. Verteilkopf wie Wendemechanismus müssen dabei manuell bereitgestellt resp. gewechselt werden. Die Wandung der Form besteht aus einem Lochblech und mehrere Formen können in Sätzen angeordnet sein. An den Endflächen eines Satzes sind zylindrische Zapfen zum andocken einer Handhabungseinrichtung vorgesehen.

Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen.

Die eigentliche Pressform ist dabei von einem topfförmigen Mantel mit einem Luftzufuhrkanal umgeben (EP-B-1269832). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- bzw. Pressdeckel über eine Kippeinrichtung mit dem Pressstempel verbindbar (selbstzentrierend), so dass infolge möglicher Kippbewegungen ein Ansaugen des Formdeckels an der Käsemasse vermieden wird. Die Form selbst ist rund oder viereckig und kann aus einem äusseren Behälter und einem inneren, gelochten Mantel bestehen.

Die BR 9300409 offenbart eine Form mit doppelter Wandung, die mit an ihrem Boden kreuzenden Rippen versehen ist. Diese Rippen dienen jedoch lediglich als Anschlag eines Bodenblechs und sind als versteifende Elemente ungeeignet und auch nicht dafür vorgesehen.

In der US 3838955A ist eine Form zur Herstellung von Cheddar offenbart, die eine Form und einen Pressdeckel aufweist. Die Form und insbesondere der Pressdeckel sind massiv ausgeführt. Der Pressdeckel sowie der Boden der Form sind mit wenigen Löchern 5 zum Abfluss von Molke versehen. Der Pressdeckel ist plattenartig aufgebaut und besteht aus PP oder PE. Er ist mit einem erhöhten, massiven Flansch versehen, der Ösen zur Aufhängung aufweist. Der plattenartige Pressdeckel ist mit einer zweiten, der Form zugewandten, wesentlich dünneren Lochplatte zur Entsirtung der Käsemasse versehen.

Zur Erreichung der erforderlichen Formstabilität beim Abpressen von Molke weisen solche plattenartigen Pressdeckel aus Kunststoff eine Dicke von ca. 10mm auf.

Eine weitere Käseform mit einer perforierten Formwand aus Metall ist in der DE-B-1030612 offenbart. Diese Formwand weist an ihrer inneren Oberfläche gleichmässig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird. Eine solche Käseform mit perforierter Wandung kann nach DE-C-2823182 auch aus Kunststoff bestehen, an deren Innenseite zueinander parallele Riefen mit dreieckigem Querschnitt vorgesehen sind. Im Übergangs- und einteiligen Bodenbereich sind die Riefen durch Rippen mit Unterbrechungen getrennt. Derartige Formwände oder Doppelböden sind aufwändig in der Reinigung.
In der EP 2710889 A1 ist ein Pressdeckel offenbart, der aus einem Lochblech mit einer, darauf befindlichen, versteifenden Rippenstruktur aus einem rostfreien Stahl gebildet ist. Die Rippenstruktur ist an dünnen Stegen unlösbar mit dem Lochblech verbunden, insbesondere verschweisst.

Der Erfindung liegt die Aufgabe zugrunde, einen Pressdeckel, der mit einer Käseform korrespondiert und der zur Anordnung am Presskopf einer Kassettenpresse oder dergleichen geeignet ist, zu entwickeln, der einfach aufgebaut ist, einem Pressdruck standhält und auch hohen hygienischen Anforderungen genügt.

Die Aufgabe ist mit den Merkmalen der Patentansprüche 1 und 6 gelöst.
Ein erfindungsgemässer Pressdeckel umfasst im Wesentlichen eine einteilige Lochplatte aus einem lebensmittelzugelassenen Kunststoff, deren Querschnitt dem inneren

Querschnitt einer Käseform, mit der der Pressdeckel bei üblicher Verwendung korrespondiert, entspricht, mit daran angeformter Rippenstruktur, die dem Pressdeckel die notwendige Formstabilität und Steifigkeit verleiht.
Der Pressdeckel ist einstückig hergestellt, zum Beispiel durch ausfräsen aus einer Platte oder im 3D-Druck.
Der erfindungsgemässe Pressdeckel ermöglicht einerseits einen guten Molkeabfluss und ist andererseits leicht und vollständig von beiden Seiten her reinigbar.
Der erfindungsgemässe Pressdeckel wird in einem Vorgang einstückig aus einem lebensmittelzugelassenen Kunststoff gefertigt, zum Beispiel aus PE oder PP.

Bevorzugte Ausgestaltungen sind in den abhängigen Ansprüchen offenbart.

Die Lochplatte weist bevorzugt eine Dicke von ca. 3-5mm auf und ist mit einer Lochung versehen, ausgenommen die Bereiche unterhalb der Rippenstruktur, die ungelocht verbleiben. Der Lochdurchmesser der Lochung beträgt vorzugsweise 0,4-1,0mm. Kleinere Lochdurchmesser sind weniger gut reinigbar. Die einzelnen Löcher sind mit einem Abstand von 2-5mm voneinander angeordnet.

Bei runden Käseformen erstrecken sich einzelne Rippen in Form von Streben über den Mittelpunkt des Pressdeckels verlaufend bevorzugt strahlenförmig bzw. radial von der Längsachse der Käseform ausgehend über die Lochplatte bis zum Umfang. Sie kreuzen dabei ringförmig angeordnete Querrippen und sind mit diesen verbunden, wobei mehrere Ringe mit unterschiedlichen Durchmessern beabstandet voneinander vorgesehen sein können. Bei mehreckigen Käseformen sind anstelle der Ringe auch Streben parallel zu den Aussenkanten möglich.

Die Rippenstruktur weist weiterhin nach oben gerichtete Ösen oder dergleichen auf, die eine Anordnung des Pressdeckels zum Beispiel an einem Pressstempel ermöglichen.

Der erfindungsgemässe Pressdeckel kann mit beliebigem Querschnitt ausgeführt sein, insbesondere einen runden oder viereckigen Querschnitt aufweisen. Möglich wären aber auch Sonderformen, wie zum Beispiel ein herzförmiger Querschnitt.

Entsprechend ist auch die Rippenstruktur auf Formen beliebiger Querschnitte anwendbar, insbesondere auf runde wie eckige Formen anwendbar, mit entsprechenden Adaptionen.

Die Rippen sind so dimensioniert, dass die Aussenmasse bestehender Kassetten für die Aufnahmen von Käseformen unverändert bleiben können.

Eine solche Formgebung, Materialwahl und Herstellungsweise ergibt sich nicht naheliegend aus dem Stand der Technik. Vorbekannte Pressdeckel bestehen hingegen zum Beispiel aus einem steifen Deckelblech aus Stahl oder Kunststoff, in Form und Abmessungen dem inneren Querschnitt einer Käseform entsprechend und einem, an der Unterseite des Deckelblechs angeordneten, dünnen Lochblech. Das Deckelblech weist zudem eine Anzahl grösserer Öffnungen zum Abfluss von Molke beim Abpressen von Käserohmasse auf.
In den ungelochten Bereichen des Deckelblechs beim Stand der Technik können sich Molke- und Käsereste oder andere Verunreinigungen ablagern, die nicht sichtbar und nur schwer entfernbar sind.

Die Erfindung wird nachfolgend in einem Ausführungsbeispiel näher beschrieben. In der Zeichnung zeigen die
- Fig. 1:: einen erfindungsgemässen Pressdeckel;
- Fig. 2:: den Pressdeckel nach Fig. 1 in Seitenansicht und
- Fig. 3:: den Pressdeckel nach Fig. 1 in Draufsicht.

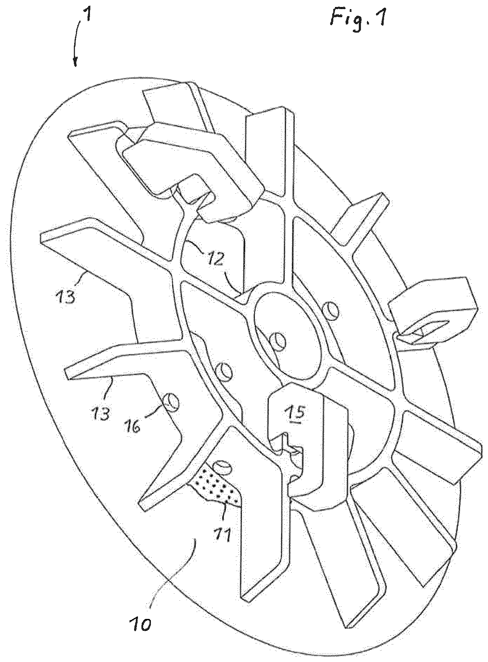

Ein erfindungsgemässer Pressdeckel 1 (Fig. 1) aus PE, im Beispiel für eine runde Käseform, umfasst eine einwandige, kreisrunde Lochplatte 10, die in ihrem Querschnitt dem inneren Querschnitt der Käseform entspricht (ebenfalls kreisrund).
An der Lochplatte 10 ist an der, von der Käseform abgewandten Seite eine, darauf befindliche, versteifende Rippenstruktur 12, 13 angeformt, die dem Pressdeckel 1 die notwendige Steifigkeit für das Abpressen von Molke verleiht. Die Rippenstruktur 12, 13 umfasst Stege 13 (Längsrippen)und ringförmig angeordnete Ringe 12 (Querrippen). Die Stege 13 sind über den Mittelpunkt des Pressdeckels verlaufend bevorzugt strahlenförmig bzw. radial vom Mittelpunkt resp. von der Längsachse der Käseform ausgehend über die Lochplatte 10 bis zum Umfang der Lochplatte 10 ausgebildet. Sie kreuzen dabei die ringförmig angeordneten Ringe 12 und sind mit diesen an den Kreuzungspunkten verbunden, wobei mehrere Ringe 12 mit unterschiedlichen Durchmessern beabstandet voneinander vorgesehen sein können.

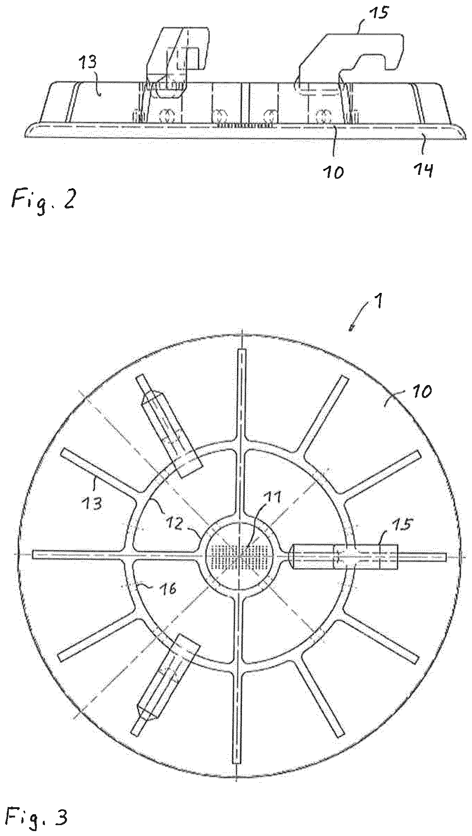

Die Lochplatte weist im Beispiel eine Wandstärke (Dicke) von ca. 3mm auf und ist im Beispiel auf dem Umfang mit einem, der Käseform zugewandten Rand 14 versehen (Fig. 2). Dieser Rand 14 ist im Beispiel flexibel und beim Abpressen von Molke dicht an der Innenwand der Käseform anliegend. Bis auf die Rippenstruktur 12, 13 ist die Lochplatte 10 mit einer Lochung 11 (in den Fig. 1 und 3 beispielhaft dargestellt) versehen. Die Bereiche unterhalb der Rippenstruktur 12, 13 verbleiben ungelocht. Der Lochdurchmesser beträgt 0,4-1,0mm. Bei kleineren Lochdurchmessern können Probleme bei der Reinigung auftreten, Lochdurchmesser grösser als 1mm sind für einen guten Molkeabfluss nicht erforderlich.

Die Ringe 12 sind zwischen zwei Stegen 13 mit Öffnungen 16 zum Abfluss von Flüssigkeiten versehen.
Auf den Stegen 13 sind im Beispiel noch drei Haken 15 zur Anordnung an einem Pressstempel angeschweisst.

Der erfindungsgemässe Pressdeckel 1 ist einstückig gefertigt, im Beispiel aus einer Platte aus PE (oder einem anderen lebensmittelzugelassenen Kunststoff) aus dem Vollen gefräst. Die Lochplatte 10 und die Rippenstruktur 12, 13 sind somit stoff- und formschlüssig miteinander, unlösbar und ohne Verbindungselemente, verbunden. Dies gewährleistet einerseits eine hohe Formstabilität und andererseits eine sehr gute Reinigbarkeit. Es bestehen keine Spalte oder dergleichen, in denen sich Käsemasse oder Schmutz absetzen könnte.

In den Bereichen der Rippenstruktur 12, 13 ist keine Lochung 11 vorgesehen, was die Sanitation des Pressdeckels 1 weiter verbessert.

Anstelle einer spanenden Herstellung des Pressdeckels 1 könnte dieser auch in einem 3D-Drucker aus einem Kunststoff einstückig gefertigt werden. Die Lochung 11 müsste jedoch nachträglich eingebracht werden.

Eine runde Käseform, mit der der erfindungsgemässe Pressdeckel 1 korrespondiert und wie sie zum Beispiel in der EP 2845469 A1 der Anmelderin offenbart ist, umfasst einen zylindrischen Mantel mit einem oberen Korb und einen Boden. Für hoch zu pressenden Käse, d. h. Hartkäse, besteht die Mantelwand und ggf. auch der Boden aus Feinlochblech Conidur®. Infolge der spezifischen Lochung kann die Bildung von "Haaren" vermieden werden, wie sie bei Kunststoffformen oder normalen, dickeren Lochblechen auftritt.
Bei der Abpressung von Weichkäse oder Halbhartkäse kann hingegen eine konventionelle Lochung ausreichend sein.
Das Lochblech kann unterhalb des Korbs einen Molkerand mit einer gröberen Lochung als der übrige Mantel aufweisen, insbesondere bei der Herstellung von Hartkäse. Bei weicherem Käse ist eine unterschiedliche Lochung des Mantels nicht zwingend.

Die Käseformen können grundsätzlich auch aus einem Kunststoff bestehen.

Die Käseformen gelangen in bekannten, nicht dargestellten Kassettenpressen zum Einsatz. Eine solche Kassettenpresse dient in an sich bekannter Weise dem flüssigkeitsverringernden Pressen von Käserohmasse und umfasst insbesondere
- eine in der Draufsicht rechteckige und oben offene Wanne mit in der Draufsicht rechteckigen, oben offenen Kassetten, die in Reihen quer zur Längsrichtung der Wanne nebeneinander angeordnet sind,
- Käseformen zur Aufnahme der zu pressenden Käserohmasse, die in den Kassetten angeordnet sind, und zumindest einen Boden und einen Mantel mit mindestens einem Auslass für die abzupressende Flüssigkeit aufweisen, wobei eine Kassette mindestens eine Käseform umfasst und zumindest der Boden der Käseform mit einer Rippenstruktur versehen sein kann, und wobei die Käseform Teil der Kassette sein kann,
- einen, auf Endsäulen gelagerten Presskopf mit einer Vielzahl, auf die Käseformen ausgerichteten Pressstempel, mit daran befindlichem Pressdeckel 1, zum Pressen der Käserohmasse, z. B. entsprechend der Offenbarung der EP 543899 B1 ausgebildet, sowie ggf. Niederhalter zum abdrücken des Presskopfes von den Kassetten,
- ein Rohrverteilsystem resp. einen Abfüllapparat zum Einschwemmen der Käserohmasse in die Käseformen,
- mindestens eine Handhabungseinrichtung, die entlang der Längsseiten der Wanne verfahrbar ist, zum anheben, verfahren zu und ablegen einer Kassetten auf einer Fördereinrichtung ausserhalb der Wanne,
- eine Einrichtung zum drehen/wenden der Kassette bzw. Kassettenreihe um deren Längsachse.

Bevorzugt kann der Kassettenpresse weiterhin ein, oberhalb der Fördereinrichtung horizontal angeordneter und federnd gelagerter Rüttler in Form eines Spannrahmens zur Aufnahme einer Kassette zugeordnet sein, der mit Unwuchtmotoren versehen ist. Erst nach einer Rüttelung werden die Käselaibe auf die Fördereinrichtung entleert.

### Bezugszeichenliste

- 1: Pressdeckel
- 10: Lochplatte
- 11: Lochung
- 12: Querrippe, Ring
- 13: Längsrippe, Steg
- 14: Rand
- 15: Haken, Öse
- 16: Öffnung

## Patentansprüche

1. Pressdeckel für eine Käseform, wobei der Pressdeckel (1) in seinem Querschnitt dem inneren Querschnitt der Käseform entspricht, wobei er aus einem lebensmittelzugelassenen Kunststoff besteht und einstückig bzw. einteilig ist und eine einwandige Lochplatte (10) und eine, an der, von der Käseform abgewandten Seite der Lochplatte (10) angeformte Rippenstruktur (12, 13) umfasst, und wobei die Rippenstruktur (12, 13) Längsrippen in Form von Stegen (13) und ringförmige, kreuzend angeordnete Querrippen (12) umfasst.

2. Pressdeckel nach Anspruch 1, **dadurch gekennzeichnet, dass** die Stege (13) über den Mittelpunkt des Pressdeckels (1) bevorzugt strahlenförmig bzw. radial über die Lochplatte (10) bis zum Umfang der Lochplatte (10) verlaufend ausgebildet sind und dabei die Querrippen (12) kreuzen, wobei mehrere ringförmige Querrippen (12) mit unterschiedlichen Durchmessern beabstandet voneinander vorgesehen sein können.

3. Pressdeckel nach Anspruch 1 oder 2, **dadurch gekennzeichnet, dass** die Lochplatte (10) mit einer Lochung (11) versehen ist, ausgenommen die Bereiche unterhalb der Rippenstruktur (12, 13).

4. Pressdeckel nach einem der Ansprüche 1 bis 3, **dadurch gekennzeichnet, dass** der Lochdurchmesser der einzelnen Löcher der Lochung (11) vorzugsweise 0,4-1,0mm beträgt und dass die Löcher in einem Abstand von 2-5mm voneinander angeordnet sind.

5. Pressdeckel nach einem der Ansprüche 1 bis 4, **dadurch gekennzeichnet, dass** die Lochplatte (10) eine Wandstärke von 3-5mm aufweist.

6. Verfahren zur Herstellung eines Pressdeckels (1) für eine Käseform, der aus einem lebensmittelzugelassenen Kunststoff besteht und eine einwandige Lochplatte (10) und eine Rippenstruktur (12, 13) umfasst, wobei der Pressdeckel (1) einstückig gefertigt wird, wobei die Rippenstruktur (12, 13) stoffschlüssig an der Lochplatte (10) angeformt ist.

7. Verfahren nach Anspruch 6, **dadurch gekennzeichnet, dass** der Pressdeckel aus einer Kunststoffplatte ausgefräst wird.

8. Verfahren nach Anspruch 6, **dadurch gekennzeichnet, dass** der Pressdeckel in einem 3D-Drucker gefertigt wird.

## Claims

1. A press cover for a cheese mold, the cross section of the press cover (1) corresponding to the inner cross section of the cheese mold, the press cover consisting of a food-approved plastic and being in one piece or in one part and comprising a single-walled perforated plate (10) and a rib structure (12, 13) formed on the side of the perforated plate (10) facing away from the cheese mold, and the rib structure (12, 13) comprising longitudinal ribs in the form of division bars (13) and annular transverse ribs (12) arranged in a crossing manner.

2. The press cover according to claim 1, **characterized in that** the division bars (13) are preferably designed running radial or radial over the perforated plate (10) to the circumference of the perforated plate (10) over the center of the press cover (1) and thereby crossing the transverse ribs (12), wherein a plurality of annular transverse ribs (12) having different diameters can be provided spaced apart from one another.

3. The press cover according to claim 1 or 2, **characterized in that** the perforated plate (10) is provided with a perforation (11), except for the regions below the rib structure (12, 13).

4. The press cover according to any one of claims 1 to 3, **characterized in that** the hole diameter of the individual holes of the perforation (11) is preferably 0.4 - 1.0 mm and that the holes are arranged at a distance of 2 - 5 mm from one another.

5. The press cover according to any one of claims 1 to 4, **characterized in that** the perforated plate (10) has a wall thickness of 3 - 5 mm.

6. A method for manufacturing a press lid (1) for a cheese mold, which consists of a food-approved plastic and comprises a single-walled perforated plate (10) and a rib structure (12, 13), the press lid (1) being manufactured in one piece, the rib structure (12 , 13) being integrally formed on the perforated plate (10).

7. The method according to claim 6, **characterized in that** the press cover is milled from a plastic plate.

8. The method according to claim 6, **characterized in that** the press cover is manufactured in a 3D printer.

## Revendications

1. Couvercle à pression, destiné à un moule à fromage, par sa section transversale, le couvercle à pression (1) correspondant à la section transversale intérieure du moule à fromage, étant constitué d'une matière plastique alimentaire et étant en monobloc et d'une pièce et comprenant une plaque perforée (10) à une seule paroi et une structure nervurée (12, 13) surmoulée sur un côté de la plaque perforée (10) qui est opposé au moule à fromage et la structure nervurée (12, 13) comprenant des nervures longitudinales sous la forme de barrettes (13) et des nervures transversales (12) de forme annulaire, placées en se croisant.

2. Couvercle à pression selon la revendication 1, **caractérisé en ce que** les barrettes (13) sont conçues au-dessus du point médian du couvercle à pression (1), en s'écoulant de préférence en forme de rayons ou en direction radiale par-dessus la plaque perforée (10) jusqu'à la périphérie de la plaque perforée (10) et en croisant à cet effet les nervures transversales (12), plusieurs nervures transversales (12) de forme annulaire pouvant être prévues avec différents diamètres, en étant écartées les unes des autres.

3. Couvercle à pression selon la revendication 1 ou 2, **caractérisé en ce que** la plaque perforée (10) est munie d'une perforation (11), à l'exception des zones en-dessous de la structure nervurée (12, 13).

4. Couvercle à pression selon l'une quelconque des revendications 1 à 3, **caractérisé en ce que** le diamètre de trou des trous individuels de la perforation s'élève de préférence à de 0,4 - 1,0 mm et **en ce que** les trous sont placés à un écart mutuel de 2 - 5 mm.

5. Couvercle à pression selon l'une quelconque des revendications 1 à 4, **caractérisé en ce que** la plaque perforée (10) présente une épaisseur de paroi de 3 - 5 mm.

6. Procédé, destiné à fabriquer un couvercle à pression (1) destiné à un moule à fromage, qui est constitué d'une matière plastique alimentaire et qui comprend une plaque perforée (10) à une seule paroi et une structure nervurée (12, 13), le couvercle à pression (1) étant fabriqué en monobloc, la structure nervurée (12, 13) étant surmoulée par matière sur la plaque perforée (10).

7. Procédé selon la revendication 6, **caractérisé en ce qu'**on fraise le couvercle à pression à partir d'une plaque en matière plastique.

8. Procédé selon la revendication 6, **caractérisé en ce qu'**on fabrique le couvercle à pression dans une imprimante 3D.
